**Europäisches Patentamt**

**European Patent Office**

**Office européen des brevets**

(19)

(11) Veröffentlichungsnummer : **0 227 068**
**B1**

# (12) EUROPÄISCHE PATENTSCHRIFT

(45) Veröffentlichungstag der Patentschrift :
**19.10.88**

(21) Anmeldenummer : **86117759.0**

(22) Anmeldetag : **19.12.86**

(51) Int. Cl.⁴ : **B 60 K 17/356, F 16 D 25/04**

(54) **Antriebseinrichtung für Kraftfahrzeuge, insbesondere Personenkraftwagen.**

(30) Priorität : **20.12.85 DE 3545483**

(43) Veröffentlichungstag der Anmeldung :
**01.07.87 Patentblatt 87/27**

(45) Bekanntmachung des Hinweises auf die Patenterteilung : **19.10.88 Patentblatt 88/42**

(84) Benannte Vertragsstaaten :
**AT CH DE ES FR GB IT LI SE**

(56) Entgegenhaltungen :
**DE-C-  630 719**
**DE-C-  921 604**
**DE-C- 1 159 279**
**FR-A- 2 469 296**
**US-A- 3 439 766**

(73) Patentinhaber : **BAYERISCHE MOTOREN WERKE Aktiengesellschaft**
**Postfach 40 02 40 Petuelring 130 - AJ-36**
**D-8000 München 40 (DE)**

(72) Erfinder : **Gilke, Paul K., Dipl.-Ing.(FH)**
**Schlehenring 22**
**D-Kirchheim (DE)**
Erfinder : **Werner, Jürgen, Dipl.-Ing.**
**Prof.-Angermair-Ring 24**
**D-8046 Garching (DE)**

(74) Vertreter : **Draeger, Karlfried**
**Bayerische Motoren Werke Aktiengesellschaft Postfach 40 02 40 Petuelring 130 - AJ 36**
**D-8000 München 40 (DE)**

EP 0 227 068 B1

**Beschreibung**

Die Erfindung betrifft eine Antriebseinrichtung für Kraftfahrzeuge, insbesondere Personenkraftwagen, nach dem Oberbegriff des Anspruchs 1. Sie bezweckt die weitere Ausbildung einer Antriebseinrichtung dieser Art, die Gegenstand einer gleichzeitig eingereichten anderen Patentanmeldung (Europäische Patentanmeldung 86117761.6 mit Priorität vom 20.12.1985, Veröffentlichungsnummer EP-A-230022) ist, und zwar hinsichtlich der Schaltkupplung.

Die bei der Antriebseinrichtung nach der anderen Patentanmeldung vorgesehene druckmittelbetätigte Schaltkupplung kann sowohl formals auch kraftschlüssig ausgebildet sein. Nach der Erfindung ist eine besonders vorteilhafte kraftschlüssige Ausbildung vorgesehen. Ihre Merkmale sind im Anspruch 1 angegeben. Durch die Erfindung wird erreicht, daß die Schaltkupplung unter Berücksichtigung der speziellen Anforderungen des Einsatzgebietes bei großer Schaltsicherheit in einfacher Weise robust und kompakt gestaltet sein kann sowie geräuscharm ist, ein sanftes Kuppeln ermöglicht und mit geringem Gewicht und geringen Schwungmassen ausgebildet sein kann.

Zweckmäßige Ausgestaltungen der Erfindung sind in den Unteransprüchen gekennzeichnet.

In der Zeichnung ist ein Ausführungsbeispiel der Erfindung schematisch dargestellt, und zwar zeigt

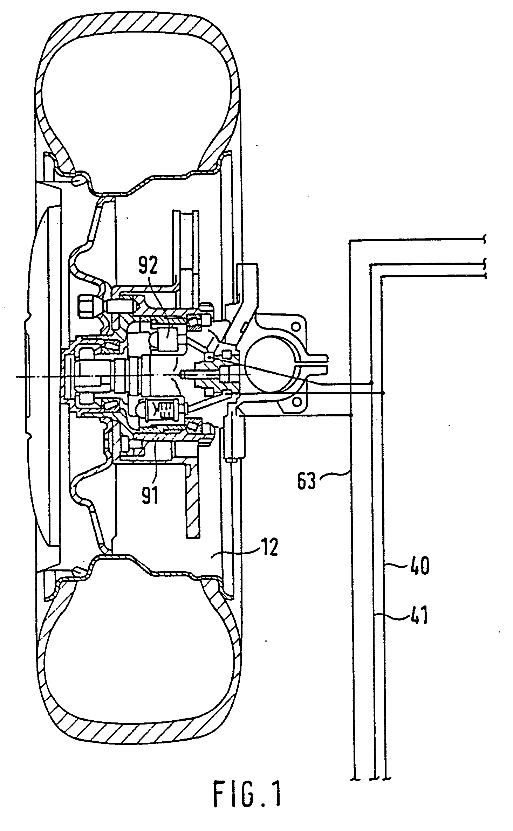

Fig. 1 einen Axialschnitt durch das linke Fahrzeug-Vorderrad eines Personenkraftwagens mit Standardantrieb, also vorn angeordnetem Fahrzeugmotor und mechanischem Hinterradantrieb,

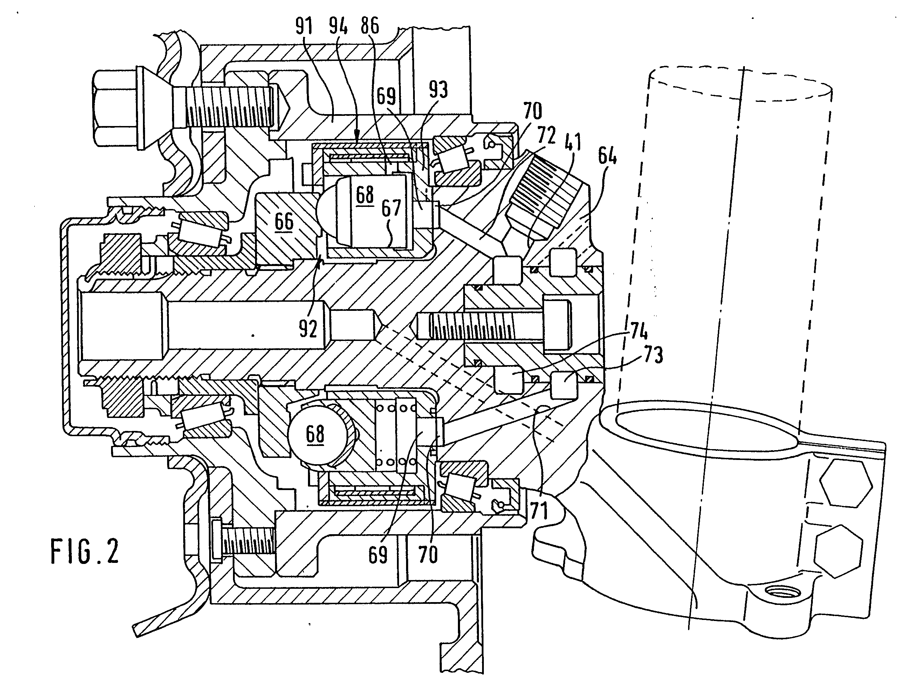

Fig. 2 einen Axialschnitt durch den Nabenbereich des linken Fahrzeug-Vorderrades nach Fig. 1 in größerem Maßstab,

Fig. 3 eine Einzelheit der Darstellung nach Fig. 2 bei ausgekuppeltem Zustand,

Fig. 4 eine Abwicklung eines Abschnitts der inneren Kupplungshälfte,

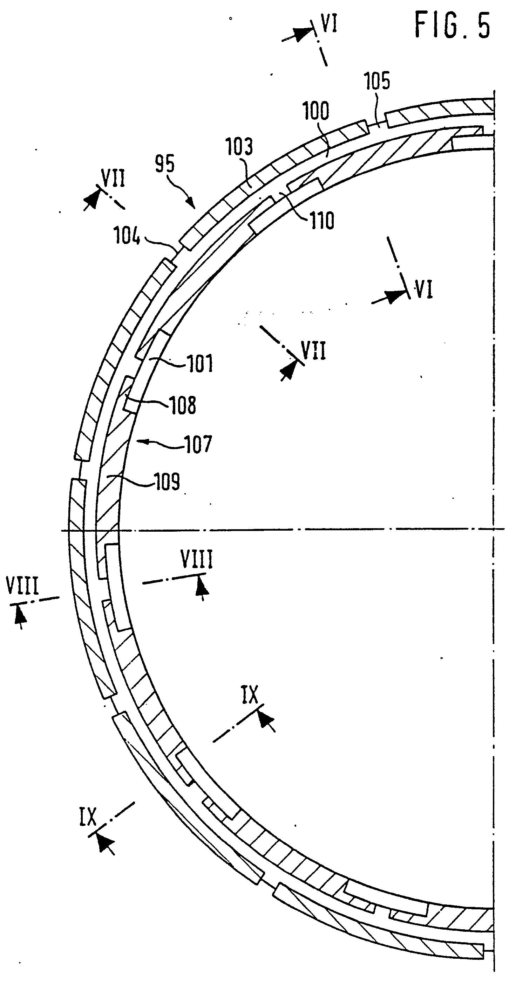

Fig. 5 einen Querschnitt durch den verlagerbaren Teil der Schaltkupplung nach der Linie V-V der Fig. 3,

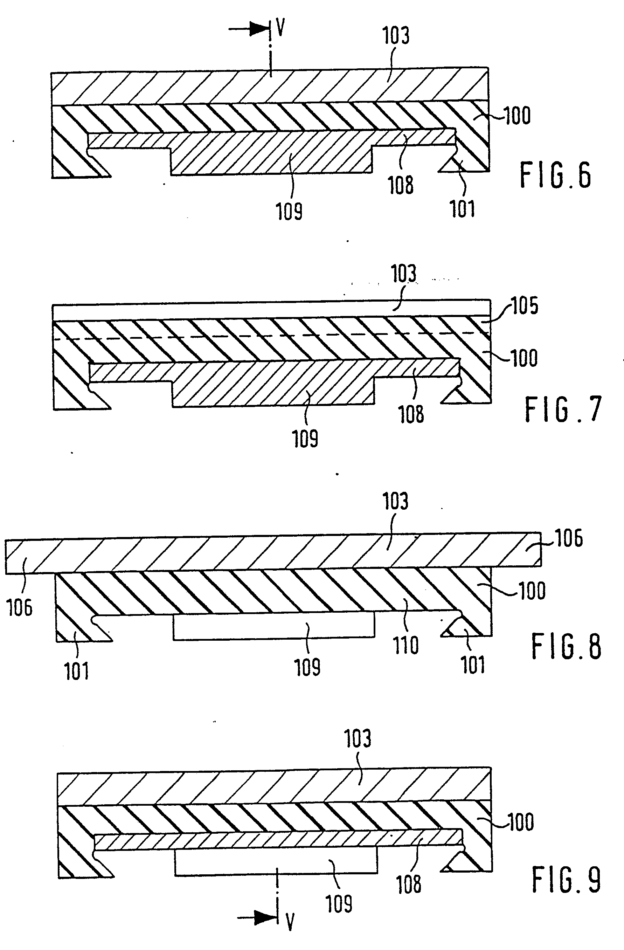

Fig. 6 einen Schnitt durch den verlagerbaren Teil der Schaltkupplung nach der Linie VI-VI der Fig. 5,

Fig. 7 einen Schnitt durch den verlagerbaren Teil der Schaltkupplung nach der Linie VII-VII der Fig. 5,

Fig. 8 einen Schnitt durch den verlagerbaren Teil der Schaltkupplung nach der Linie VIII-VIII der Fig. 5 und

Fig. 9 einen Schnitt durch den verlagerbaren Teil der Schaltkupplung nach der Linie IX-IX der Fig. 5.

Die folgenden Erläuterungen für das linke Fahrzeug-Vorderrad gelten für das spiegelbildlich ausgebildete nicht dargestellte rechte Fahrzeug-Vorderrad entsprechend.

Das nicht mechanisch angetriebene lenkbare Fahrzeug-Vorderrad 12 birgt in seiner Nabe 91 einen Hydromotor 92, der als Axialkolben-Schrägscheiben-Maschine ausgebildet ist. Der Hydromotor 92 ist durch eine Hydraulikleitung 40 für Vorwärtsfahrt und eine Hydraulikleitung 41 für Rückwärtsfahrt mit einer nicht dargestellten Hydropumpe verbunden. Eine Leckageleitung 63 führt von dem Hydromotor 92 zu einem nicht dargestellten Behälter für Hydraulikflüssigkeit.

Die Nabe 91 ist auf einem Achsschenkel 64 drehbar gelagert. Auf diesem ist ferner die Zylindertrommel 93 des Hydromotors 92 drehbar gelagert, während die Schrägscheibe 66 des Hydromotors 92 mit dem Achsschenkel 64 fest verbunden ist. Die Zylindertrommel 93 des Hydromotors 92 nimmt in acht achsparallel auf einem Kreis angeordneten Axialzylinden 67 acht Axialkolben 68 gleitbar auf.

Diese werden durch Federkraft stets in Anlage an der Schrägscheibe 66 gehalten. Die Bodenwand der Zylindertrommel 93 weist im Bereich jedes der Axialzylinder 67 Bohrungen 69 für die Zu- und Abfuhr von Hydraulikflüssigkeit auf. Die Bohrungen 69 können Steuerschlitze 70 überfahren, die in dem Achsschenkel 64 vorgesehen und an Verbindungskanäle 71, 72 angeschlossen sind. Der Verbindungskanal 71 ist innerhalb des Achsschenkels 64 mit einem Ringkanal 73 verbunden, der mit der Hydraulikleitung 40 für Vorwärtsfahrt verbunden ist. Der Verbindungskanal 72 ist innerhalb des Achsschenkels 64 mit einem Ringkanal 74 verbunden, der mit der Hydraulikleitung 41 für Rückwärtsfahrt verbunden ist.

Der Außendurchmesser der Zylindertrommel 93 des Hydromotors 92 ist kleiner als der Innendurchmesser der Nabe 91. In dem zwischen der Zylindertrommel 93 und der Nabe 91 befindlichen radialen Spalt ist eine Schaltkupplung 94 angeordnet. Diese weist eine elastische Ringmembran 95 auf, welche die Zylindertrommel 93 als endloses Band umschließt. Die Ringmembran 95 ist im wesentlichen zylindrisch gestaltet und in axialer Richtung zwischen Seitenwänden 96, 97 geführt. Die Seitenwände 96, 97 ragen über die zylinderische Außenwand der Zylindertrommel 93 hinaus radial nach außen. Die Seitenwand 96 ist mit der Zylindertrommel 93 einstückig ausgebildet und stellt eine radial nach außen ragende Fortsetzung der Bodenwand der Zylindertrommel 93 dar. Die Seitenwand 97 ist etwa als Kreisring ausgebildet und an der Stirnseite der Zylindertrommel 93 lösbar befestigt, zu welcher hin die als Sackbohrungen gestalteten Axialzylinder 67 offen sind. Die Seitenwand 97 ist dabei mit Schrauben 98 an der Zylindertrommel 93 befestigt, die über den Umfang verteilt jeweils in den Bereichen zwischen den Axialzylindern 67 in die Zylindertrommel 93 eingreifen. Die beiden Seitenwände 96, 97 weisen in axialer Richtung etwa gleiche Stärke auf. An ihren äußeren Rändern sind die Seitenwände 96, 97 mit über den Umfang verteilten Führungsnuten 99 versehen, die sich in radialer Richtung erstrecken und nach außen offen sind. Die Führungsnuten 99 sind in den beiden Seitenwänden 96, 97 fluchtend angeordnet.

Die als Sackbohrungen ausgebildeten Axialzylinder 67 weisen am fußseitigen Ende jeweils eine Erweiterung 85 auf. Bei einem der Axialzylinder 67 ist die Erweiterung 85 durch eine Verbindungsbohrung 86 mit dem Raum außerhalb der zylindrischen Außenseite der Zylindertrommel 93 verbunden.

Die Ringmembran 95 weist einen elastischen Formring 100 auf, der aus Gummi besteht, aber auch aus einem Werkstoff mit vergleichbaren Eigenschaften bestehen kann. Der Formring 100 ist etwa zylindrisch gestaltet und erstreckt sich in axialer Richtung von der Seitenwand 96 zu der Seitenwand 97. An den Seitenwänden 96, 97 liegt der Formring 100 mit seinen Stirnseiten dichtend an. An seinen stirnseitigen Enden weist der Formring 100 jeweils eine radial nach innen weisende, in Umfangsrichtung umlaufende Dichtlippe 101 auf, mit welchem er sich in der Ruhestellung auf der zylindrischen Außenwand der Zylindertrommel 93 abstützt, so daß zwischen der zylindrischen Außenwand der Zylindertrommel 93 und der Innenwand des Formringes 100 eine Ringkammer 102 gebildet ist. In die Ringkammer 102 mündet die Verbindungsbohrung 86.

Der Formring 100 trägt an seiner Außenseite elf gleichmäßig über den Umfang verteilte plattenartige Reibsgmente 103 aus Metall, die etwa rechteckig gestaltet und durch Vulkanisieren mit dem Formring 100 verbunden sind. Zwischen benachbarten Reibsegmenten 103 ist jeweils ein sich in Querrichtung erstreckender Spalt 104 vorhanden, der teilweise, beispielsweise bis zur Hälfte der Dicke der Reibsegmente 103, von FormringWerkstoff, der radial nach außen weisende Querrippen 105 bildet, ausgefüllt ist. Jedes der Reibsegmente 103 erstreckt sich in Umfangsrichtung über einen Bogen von etwa 30°. In axialer Richtung erstreckt sich jedes der Reibsegmente 103 über die gesamte Breite des Formringes 100 und damit von Seitenwand zu Seitenwand der Zylindertrommel 93. Jedes der Reibsegmente 103 weist zwei seitliche Führungsansätze 106 auf, die in die Führungsnuten 99 der Seitenwände 96, 97 eingreifen und in Umfangsrichtung mittig an den Reibsegmenten 103 angeordnet sind.

An seiner Innenseite trägt der Formring 100 elf gleichmäßig über den Umfang verteilte plattenartige Abstützsegmente 107 aus Metall, die ebenfalls durch Vulkanisieren mit dem Formring 100 verbunden sind. Jedes der Abstützsegmente 107 weist einen etwa rechteckig gestalteten Tragteil 108 und einen Abstützansatz 109 auf. Zwischen benachbarten Tragteilen 108, über welche die Abstützsegmente 107 an dem Formring 100 befestigt sind, ist jeweils ein sich in Querrichtung erstreckender Spalt vorhanden, der von FormringWerkstoff, der radial nach innen weisende Querrippen 110 bildet, ausgefüllt ist. Jeder der Tragteile 108 erstreckt sich in Umfangsrichtung über einen Bogen von etwa 30°. In axialer Richtung erstreckt sich jeder der Tragteile 108 über die gesamte Breite zwischen den beiden Dichtlippen 101 des Formringes 100. Die Abstützansätze 109 sind mit den Tragteilen 108 einstückig ausgebildet. Sie weisen ebenfalls eine rechteckige Formgebung, jedoch sowohl in Umfangsrichtung als auch in axialer Richtung eine geringere Erstreckung als die Tragteile 108 auf. Sie sind an den Tragteilen 108 mittig angeordnet und weisen von diesen aus radial nach innen. Sie ragen so weit wie die Dichtlippen 101 radial nach innen und stützen sich in der Ruhelage ebenso wie die Dichtlippen 101 auf der zylindrischen Außenwand der Zylindertrommel 93 ab. Gegenüber den Reibsegmenten 103 sind die Abstützsegmente 107 in Umfangsrichtung auf Mitte versetzt angeordnet.

An der Innenseite der Nabe 91 ist eine Kupplungsreibfläche 111 vorgesehen gegen die sich die Reibsegmente 103 legen können.

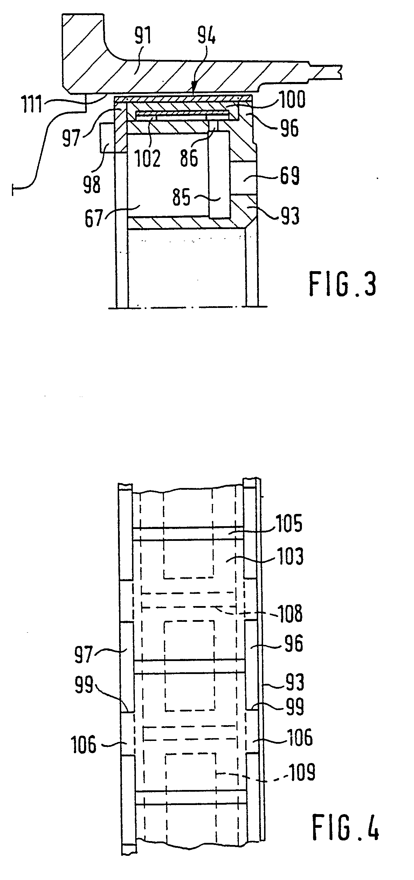

Bei in Ruhe befindlicher Hydropumpe und damit druckentlastetem Hydromotor 92 befindet sich die Ringmembran 95 infolge der Rückstellwirkung des elastischen Formringes 100, der wie eine um die Zylindertrommel 93 geschlungene Zugfeder wirkt, in den in Fig. 3 dargestellten Ruhelage. In dieser Schaltstellung ist die Schaltkupplung 94 entkuppelt.

Wird die Hydraulikanlage eingeschaltet, baut sich in den mit Hydraulikflüssigkeit gefüllten Räumen ein Druck auf. Je nach der gewählten Fahrtrichtung bilden entweder bei Vorwärtsfahrt der Verbindungskanal 71 und der Ringkanal 73 oder bei Rückwärtsfahrt der Verbindungskanal 72 und der Ringkanal 74 Bestandteile der Hochdruckseite des die Hydropumpe und den Hydromotor 92 einschließenden geschlossenen Hydraulikkreises. Die jeweils anderen Kanäle bilden Bestandteile der Niederdruckseite, welche die Hydraulikflüssigkeit von dem Hydromotor 92 zu der Hydropumpe zurückleitet. Sowohl auf der Hochdruck- als auch auf der Niederdruckseite des geschlossenen Hydraulikkreises wird durch zwei einstellbare Druckbegrenzungsventile im Betriebszustand ein Mindestdruck aufrecht erhalten, der beispielsweise 15 bar betragen kann. Der Druck auf der jeweiligen Hochdruckseite kann in Abhängigkeit von der Gaspedalstellung bis zu einem oberen Grenzwert ansteigen.

Die dem Hydromotor 92 auf der Hochdruckseite zugeleitete Hydraulikflüssigkeit bewirkt eine Drehbewegung der Zylindertrommel 93 um den feststehenden Achsschenkel 64. Dabei kann zunächst das Fahrzeug-Vorderrad 12 stillstehen. Sobald der Axialzylinder 67, von welchem die Verbindungsbohrung 86 aus in die Ringkamme 102 führt, in den Bereich der Hochdruckseite gelangt und damit Hydraulikflüssigkeit zugeleitet bekommt, gelangt dieser durch die Verbindungsbohrung 86 auch in die Ringkammer 82 zwischen der Zylindertrommel 93 und der Ringmembran 95. Die dadurch bewirkte Beaufschlagung der zylindrischen Innenseite der Ringmembran 95 bewirkt unter Vergrößerung der Ringkammer 102 ein Verschieben der Ringmembran 95 entgegen der Widerstandskraft des elastischen Formringes 100 in radialer Richtung nach außen auf die Nabe 91 zu. Dabei gelangen die Reibsegmente 103 der Ringmembran 95 zur Anlage an der Kupplungsreibfläche 111 der Nabe 91. In dieser Schaltstellung sind die Zylindertrommel 93 des Hydromotors 92 und die Nabe 91 miteinander gekuppelt.

Das Drehmoment wird von der Zylindertrommel 93 über die Führungsnuten 99 und die Führungsansätze 106 formschlüssig auf die Reibsegmente 103 und von diesen kraftschlüssig auf die Nabe 91 übertragen. Die durch die Führungsnuten 99 und die Führungsansätze 106 bewirkte drehfeste Anordnung der Ringmembran 95 an der Zylindertrommel 93 hat zur Folge, daß der Formring 100 durch die Drehmomentübertragung nicht belastet wird. Der Formring 100 muß die Elastizität der Ringmembran 95 gewährleisten, die Ringkammer 102 an den Seitenwanden 96, 97 abdichten und die Rückstellung der Ringmembran 95 in die Ruhelage bewirken. Die Abstützansätze 109 dienen dazu, ein rasches und gleichmäßiges Ansprechen der Schaltkupplung 94 über den gesamten Umfang hinweg sicherzustellen. Denn sie halten Durchströmkanäle und Beaufschlagungsflächen frei, durch welche die durch die Verbindungsbohrung 86 einströmende Hydraulikflüssigkeit selbst bei in Ruhestellung befindlicher Ringmembran 95 rasch über den gesamten Umfang hinweg wirksam werden kann.

Bei Ausschalten der Hydraulikanlage werden die beiden Druckbegrenzungsventile in die Ruhestellung zurückgestellt und der Hydraulikkreis zum Behälter für die Hydraulikflüssigkeit hin entlastet. Bei dieser Betriebslage stellt der Formring 100 die Ringmembran 95 aus der gekuppelten Stellung in die entkuppelte Stellung zurück (Fig. 3). Der Formring 100 ist derart ausgelegt, daß er ein Verlagern der Ringmembran 95 in die gekuppelte Stellung bei Erreichen des unteren Grenzwertes des Druckes im Hydraulikkreis ermöglicht, die Rückstellung der Ringmembran 95 jedoch bewirkt, sobald der Druck im Hydraulikkreis auf einen bestimmten Betrag, beispielsweise 8-10 bar, unterhalb des unteren Druck-Grenzwertes gesunken ist.

In Abweichung von dem Ausführungsbeispiel können mehrere oder sämtliche Erweiterungen 85 der Axialzylinder 67 durch Verbindungsbohrungen 86 mit der Ringkammer 102 verbunden sein.

Außerdem kann die Druckbeaufschlagung der Zylinderinnenseite der Ringmembran 95 auch auf anderem Wege erreicht werden. Beispielsweise kann in der Kreisringfläche, an welcher sich die Zylindertrommel 93 des Hydromotors 92 in axialer Richtung abstützt, entweder an der Zylindertrommel 93 oder an dem Achsschenkel 64 ein Ringkanal vorgesehen sein, der mit den beiden Hydraulikleitungen 40, 41 verbunden ist, welche die Hydropumpe mit dem Hydromotor 92 verbinden. Dieser Ringkanal kann mit der Ringkammer 102 durch einen Verbindungskanal verbunden sein, der in der Zylindertrommel 93 verläuft. Auch bei diesem Beispiel können statt des einen Verbindungskanals mehrere Verbindungskanäle über den Umfang verteilt vorgesehen sein. Bei diesem Ausführungsbeispiel sind in den beiden Verbindungsleitungen zwischen den Hydraulikleitungen 40, 41 und dem in der kreisringförmigen Abstützfläche befindlichen Ringkanal jeweils ein ein- und ausschaltbares Sperrventil angeordnet. Dieses verhindert, daß das Druckmittel, das über die jeweilige Hochdruckseite der Ringkammer 102 zugeleitet wird, auf der jeweiligen Niederdruckseite unbeabsichtigt abfließt. Darüber hinaus ist eine Betätigung der Schaltkupplung nicht durch das Arbeitsdruckmittel des Hydromotors 92, sondern durch gesonderte Druckmittel möglich.

Die Antriebseinrichtung kann nicht nur bei nicht mechanisch angetriebenen Fahrzeug-Vorderrädern, sondern in entsprechender Weise bei einem Fahrzeug-Frontantrieb bei den mechanisch nicht angetriebenen Fahrzeug-Hinterrädern eingesetzt werden.

**Patentansprüche**

1. Antriebseinrichtung für Kraftfahrzeuge, insbesondere Personenkraftwagen, mit mechanischer Antriebsverbindung zwischen dem Fahrzeugmotor und den Fahrzeugrädern einer der Fahrzeugachsen sowie mit zu- und abschaltbarem Zusatzantrieb für die Fahrzeugräder (12) der anderen Fahrzeugachse, bei welcher der Zusatzantrieb als hydrostatischer Einzelradantrieb ausgebildet ist, bei dem in den Naben (91) der Fahrzeugräder der Zusatzantriebsachse jeweils als Zusatzantriebsmotor ein als Axialkolbenkonstantmotor in Schrägscheiben-Bauart und als Radnabenmotor ausgebildeter Hydromotor (92) angeordnet ist, bei welcher ferner wenigstens eine von dem Fahrzeugmotor antreibbare Hydropumpe vorgesehen ist, welche den Hydromotoren die Antriebsenergie liefert, und bei welcher weiter jeweils zwischen Hydromotor und Nabe des Fahrzeugrades eine druckmittelbetätigte Schaltkupplung (94) vorgesehen ist, dadurch gekennzeichnet, daß die Schaltkupplung (94) als Zylinderreibungskupplung ausgebildet ist, die eine die Zylindertrommel (93) des Hydromotors (92) umschließende endlose elastische Ringmembran (95) aufweist, die im wesentlichen zylindrisch gestaltet ist, gemeinsam mit der zylindrischen Außenwand der Zylindertrommel (93) und Seitenwänden (96, 97), die über die zylindrische Außenwand der Zylindertrommel (93) hinaus radial nach außen ragen und die Ringmembran (95) zwischen sich einschließen, eine Ringkammer (102) bildet und an ihrer Außenseite über den Umfang verteilt starre Reibsegmente (103) aufweist, die mit Abstand voneinander angeordnet und in Führungsnuten (99) der Seitenwande (96, 97) radial geführt sind sowie an einer Kupplungsreibfläche (111) der Nabe (91) des Fahrzeugrades (Fahrzeugvorderrad 12) zur Anlage gelangen können.

2. Antriebseinrichtung nach Anspruch 1, dadurch gekennzeichnet, daß die Reibsegmente (103) seitliche Führungsansätze (106) aufweisen, mit denen sie in die Führungsnuten (99) der Seitenwände (96, 97) eingreifen.

3. Antriebseinrichtung nach Anspruch 2, dadurch gekennzeichnet, daß die Führungsansätze (106) in Umfangsrichtung mittig an den Reibsegmenten vorgesehen sind.

4. Antriebseinrichtung nach Anspruch 1, 2 oder 3 dadurch gekennzeichnet, daß die Ringmembran (95) über den Umfang verteilt radial nach innen weisende Abstützansätze aufweist, die in Umfangsrichtung und in axialer Richtung Durchflußkanäle frei lassen.

5. Antriebseinrichtung nach Anspruch 4, dadurch gekennzeichnet, daß die Ringmembran (95) an ihrer Innenseite mit Abstand voneinander starre Abstützsegmente (107) aufweist, welche die radial nach innen weisenden Abstützansätze (109) einstückig aufweisen.

6. Antriebseinrichtung nach Anspruch 5, dadurch gekennzeichnet, daß die Abstützansätze (109) sowohl in Umfangsrichtung als auch in axialer Richtung eine geringere Ausdehnung als Tragteile (108) der Abstützsegmente (107) aufweisen und an diesen mittig angeordnet sind.

7. Antriebseinrichtung nach Anspruch 5 oder 6, dadurch gekennzeichnet, daß die Reibsegmente (103) und die Abstützsegmente (107) in gleicher Anzahl vorhanden und in Umfangsrichtung gegeneinander versetzt angeordnet sind.

8. Antriebseinrichtung nach einem der Ansprüche 1 bis 7, dadurch gekennzeichnet, daß der elastische Werkstoff der Ringmembran (95) die jeweils zwischen den Reibsegmenten (103) und den Tragteilen (108) der Abstützsegmente (107) vorhandenen Spalte (105) zumindest teilweise ausfüllt.

9. Antriebseinrichtung nach einem der Ansprüche 1 bis 8, dadurch gekennzeichnet, daß die Ringkammer (102) mit dem Druckmittelraum der Zylindertrommel (93) des Hydromotors (92) verbunden ist und den beiden Hydraulikleitungen (40, 41), welche die Hydropumpe mit dem Hydromotor (92) verbinden, jeweils ein ein- und ausschaltbares Ventil zugeordnet ist, das im eingeschalteten Zustand erst oberhalb eines Mindestdruckes zum Druckmittelbehälter hin öffnet.

10. Antriebseinrichtung nach einem der Ansprüche 1 bis 8, dadurch gekennzeichnet, daß die Ringkammer (102) mit den beiden Hydraulikleitungen (40, 41) verbunden ist, welche die Hydropumpe mit dem Hydromotor (92) verbinden, und in den beiden Verbindungsleitungen zwischen den Hydraulikleitungen (40, 41) und der Ringkammer (102) jeweils ein ein- und ausschaltbares Sperrventil angeordnet ist.

**Claims**

1. Drive means for motor vehicles, especially passenger cars, comprising a mechanical drive connection between the vehicle engine and the vehicle wheels of one of the vehicle axles and an on/off switchable additional drive for the vehicle wheels (12) of the other vehicle axle, the additional drive being a hydrostatic single-wheel drive with a fluid power motor (92) in the form of a wheel hub motor and of an axial-piston fixed-displacement motor with an inclined plate being disposed as an additional drive motor in the hub (91) of each of the vehicle wheels on the additional drive axle, and at least one fluid power pump being provided which is drivable by the vehicle engine and which is arranged to supply driving energy to the fluid power motors, there being a pressure-medium actuated clutch (94) between each of the fluid power motors and the respective vehicle wheel hub, characterised in that the clutch (94) is a cylinder friction clutch comprising an endless resilient annular diaphragm (95) surrounding the cylinder drum (93) of the fluid power motor (92) and of substantially cylindrical shape which, in co-operation with the cylindrical outer wall of the cylinder drum (93) and side walls (96, 97) projecting radially outwards over the cylindrical outer wall of the cylinder drum (93) and enclosing the annular diaphragm (95) between them, forms an annular chamber (102) and, on its outer side, has spaced-apart peripherally-distributed rigid friction segments (103) which are radially guided in guide grooves (99) of the side walls (96, 97) and are adapted to abut a clutch friction surface (111) on the hub (91) of the vehicle wheel (vehicle front wheel 12).

2. Drive means according to Claim 1, characterised in that the friction segments (103) have lateral guide projections (106) engaging in the guide grooves (99) in the side walls (96, 97).

3. Drive means according to Claim 2, characterised in that the guide projections (106) are disposed centrally on the friction segments in the peripheral direction.

4. Drive means according to Claim 1, 2 or 3, characterised in that the annular diaphragm (95) has peripherally-distributed radially-inward bearing projections which leave flow channels free in the peripheral direction and in the axial direction.

5. Drive means according to Claim 4, characterised in that the annular diaphragm (95) has, on its inside, spaced-apart rigid bearing segments (107) formed integrally with the radially-inward bearing projections (109).

6. Drive means according to Claim 5, characterised in that the bearing projections (109) both in the peripheral direction and in the axial direction are shorter than supporting parts (108) of the bearing segments (107) and are disposed centrally on them.

7. Drive means according to Claim 5 or 6, characterised in that the friction segments (103) and the bearing segments (107) are present in the same numbers and are offset from one another in the peripheral direction.

8. Drive means according to any one of Claims 1 to 7, characterised in that the resilient material of the annular diaphragm (95) at least partly fills the gaps (105) between the friction segments (103) and the supporting parts (108) of the bearing segments (107).

9. Drive means according to any one of Claims 1 to 8, characterised in that the annular chamber (102) is connected to the pressure-medium space in the cylinder drum (93) of the fluid power motor (92) and the two hydraulic lines (40, 41) connecting the fluid power pump to the fluid power motor (92) are each associated with an on/off valve which, when switched on, opens towards the pressure-medium container only when à minimum pressure is exceeded.

10. Drive means according to any one of Claims 1 to 8, characterised in that the annular chamber (102) is connected to the two hydraulic lines (40, 41) connecting the fluid power pump to the fluid power motor (92), and an on/off check valve is disposed in each of the two connecting lines between the hydraulic lines (40, 41) and the annular chamber (102).

**Revendications**

1. Dispositif de propulsion pour véhicules automobiles, notamment pour voitures particulières, avec une liaison mécanique d'entraînement entre le moteur du véhicule et les roues de l'un des essieux du véhicule, ainsi qu'avec un entraînement supplémentaire, susceptible d'être accouplé et désaccouplé, pour les roues (12) de l'autre essieu du véhicule, dispositif dans lequel cet entraînement supplémentaire revêt la forme d'un entraînement hydraulique de roue indépendante, entraînement dans lequel un moteur hydraulique (92), sous la forme d'un moteur constant à pistons axiaux, du type de construction à disque oblique et conçu en tant que moteur de moyeu de roue, est disposé, comme moteur d'entraînement supplémentaire, dans chacun des moyeux (91) des roues (12) de l'autre essieu du véhicule, et il est en outre prévu pour ces moteurs hydrauliques au moins une pompe hydraulique susceptible d'être entraînée par le moteur du véhicule, et qui fournit aux moteurs hydrauliques l'énergie d'entraînement, le dispositif comportant, en outre, entre chaque moteur hydraulique et le moyeu de la roue du véhicule, un embrayage (94) actionné par un fluide sous pression, dispositif de propulsion caractérisé en ce que l'embrayage (94) revêt la forme d'un embrayage cylindrique à friction comportant une membrane annulaire élastique sans fin (95), qui entoure le tambour cylindrique (93) du moteur hydraulique (92) et qui est essentiellement de forme cylindrique, cette membrane délimitant, en commun avec la paroi externe cylindrique du tambour cylindrique (93) et les parois latérales (96, 97) qui font saillie radialement vers l'extérieur au-delà de cette paroi externe cylindrique du tambour cylindrique (93) et qui enferment, entre elles, la membrane annulaire (95), une chambre annulaire (102), tandis que, sur son côté externe, cette membrane comporte des segments rigides de friction (103), répartis sur sa périphérie et espacés les uns des autres, qui sont guidés radialement dans des gorges de guidage (99) des parois latérales (96, 97) et qui peuvent venir s'appliquer contre une surface (111) d'accouplement par friction du moyeu (91) de la roue du véhicule (roue avant 12 du véhicule).

2. Dispositif de propulsion selon la revendication 1, caractérisé en ce que les segments de friction (103) comportent des appendices latéraux de guidage (106), grâce auxquels ils viennent en prise dans les gorges de guidage (99) des parois latérales (96, 97).

3. Dispositif de propulsion selon la revendication 2, caractérisé en ce que les appendices de guidage (106) sont prévus, dans la direction périphérique, au milieu des segments de friction.

4. Dispositif de propulsion selon la revendication 1, 2 ou 3, caractérisé en ce que la membrane annulaire (95) comporte, répartis sur la périphérie, des appendices d'appui dirigés radialement vers l'intérieur, qui laissent libres des canaux de passage en direction périphérique et en direction axiale.

5. Dispositif de propulsion selon la revendication 4, caractérisé en ce que la membrane annulaire (95) comporte sur son côté interne des segments rigides d'appui (107) espacés les uns des autres, qui comportent, venus d'une seule pièce avec eux, les appendices d'appui (109) dirigés radialement vers l'intérieur.

6. Dispositif de propulsion selon la revendication 5, caractérisé en ce que les appendices d'appui (109) ont, aussi bien en direction périphérique qu'en direction radiale, une plus faible expansion que les parties porteuses (108) des segments d'appui (107) et sont disposés au milieu de ceux-ci.

7. Dispositif de propulsion selon la revendication 5 ou 6, caractérisé en ce que les segments de friction (103) et les segments d'appui (107) sont en nombre identique et sont décalés les uns par rapport aux autres en direction périphérique.

8. Dispositif de propulsion selon une des revendications 1 à 7, caractérisé en ce que le matériau élastique de la membrane annulaire (95) remplit, au moins partiellement, les intervalles (105) existant entre les segments de friction (103) et les parties porteuses (108) des segments d'appui (109).

9. Dispositif de propulsion selon une des revendications 1 à 8, caractérisé en ce que la chambre annulaire (102) est reliée à la chambre de fluide sous pression du tambour cylindrique (93) du moteur hydraulique (92), et une soupape, susceptible d'être mise en circuit et hors circuit, est associée à chacune des deux canalisations hydrauliques (40, 41) reliant la pompe hydraulique au moteur hydraulique, cette soupape, lorsqu'elle est en circuit, s'ouvrant, seulement au-dessus d'une pression minimale, vers le réservoir de fluide sous pression.

10. Dispositif de propulsion selon une des revendications 1 à 8, caractérisé en ce que la chambre annulaire (102) est reliée aux deux canalisations hydrauliques (40, 41) qui relient la pompe hydraulique au moteur hydraulique (92), et une soupape antiretour, susceptible d'être mise en circuit et hors circuit, est disposée sur chacune des deux canalisations de liaison entre les canalisations hydrauliques (40, 41) et la chambre annulaire (102).

FIG.1

FIG.2

91  94  86

93

69

70

72  41

64

68

67

66

92

74

73

70

68

71

69  70

0 227 068

FIG.3

FIG.4

FIG. 5

FIG.6

103
100
108
109
101

FIG.7

103
105
100
108
109

FIG.8

103
106
106
100
101
110
109
101

FIG.9

103
100
108
109

5